Europäisches Patentamt

European Patent Office

Office européen des brevets

(11) Veröffentlichungsnummer: **0 520 276 A2**

## (12) EUROPÄISCHE PATENTANMELDUNG

(21) Anmeldenummer: **92110042.6**

(51) Int. Cl.5: **C08G 64/24**, C08G 64/06

(22) Anmeldetag: **15.06.92**

(30) Priorität: **27.06.91 DE 4121212**

(43) Veröffentlichungstag der Anmeldung:
**30.12.92 Patentblatt 92/53**

(84) Benannte Vertragsstaaten:
**BE DE FR GB IT NL**

(71) Anmelder: **BAYER AG**

**W-5090 Leverkusen 1 Bayerwerk(DE)**

(72) Erfinder: **Schomäcker, Reinhard, Dr.**
**Schmalenbruch 4**
**W-5090 Leverkusen 3(DE)**
Erfinder: **Hucks, Uwe, Dipl.-Ing.**
**Am Marienstift 30**
**W-4234 Alpen(DE)**
Erfinder: **Weymans, Günther, Dr.**
**Körnerstrasse 5**
**W-5090 Leverkusen(DE)**
Erfinder: **Herrig, Wolfgang, Dr.**
**Rommerscheiderstrasse 43**
**W-5060 Bergisch Gladbach 2(DE)**
Erfinder: **Kirsch, Jürgen, Dr.**
**Völklinger Strasse 20**
**W-5090 Leverkusen(DE)**

(54) **Verfahren zur Herstellung von Polycarbonat.**

(57) Erfindungsgemäß wird Polycarbonat nach dem Zweiphasengrenzflächenverfahren hergestellt, in dem in einer ersten Reaktionsstufe gasförmiges Phosgen aus einer Phosgenherstellung kontinuierlich mit 25 bis 30 %iger Natriumbisphenolat-Lösung zunächst ohne Natronlauge-Überschuß mit einem speziellen Mischorgan in einem Rohrreaktor ohne Abführung der Reaktionswärme zusammengebracht wird. Die wäßrige Lösung wird auf mindestens 45 °C vorgewärmt. Anschließend wird nach einer Verweilzeit von mindestens 10 Sekunden - gegebenenfalls noch im Rohrreaktor - Natronlauge zudosiert. In einem Rührkessel wird im zweiten Reaktionsschritt die Reaktionswärme abgeführt und die Polymerkette unter Zugabe von Triethylamin aufgebaut. Gegebenenfalls werden diese Maßnahmen durch einen Split der Bisphenolat-Dosierung im Rohrreaktor ergänzt. Als organische Lösungsmittel kommen Methylenchlorid und Chlorbenzol in Frage. Das erfindungsgemäße Verfahren führt zu hoher Phosgenausbeute.

EP 0 520 276 A2

Im Zweiphasengrenzflächenverfahren zur Herstellung von Polycarbonaten kommt es zur besseren Ausbeute der eingesetzten Rohstoffe und zum Erzielen guter Phasentrennung darauf an, die Reaktion so zu führen, daß möglichst wenig unerwünschte Nebenreaktionen stattfinden und die Emulsion leicht trennbar ist. Hierzu hat es nicht an Versuchen gefehlt.

So beschreibt die DOS 2 305 144 ein Verfahren zur kontinuierlichen Herstellung von Polycarbonaten, in dem die beiden reaktiven Phasen in Gegenwart von Aminen in einer Mischzone bei im wesentlichen öl-in-Wasser-Emulsionsverhältnissen zusammengebracht und die Phosgenierung in einer Reaktionsstrecke nach Vermischen abläuft. Spezielle strömungstechnische Anordnungen sollen dafür sorgen, daS die Raum-Zeit-Ausbeute der Reaktion gesteigert wird. Nachteilig ist die große Menge wäßriger Phase, die Phosgen-Nebenreaktionen unterstützt.

Nach der DOS 2 343 939 sollen die Eigenschaften eines Polycarbonats, hergestellt nach dem Zweiphasengrenzflächenverfahren, durch Steuerung der Reaktion mit einer pH-Wert-Regelung verbessert werden können. Nachteilig ist der dabei eingesetzte Phosgenüberschuß. Das Verfahren ist außerdem nicht-kontinuierlich.

Nach der Lehre der EP 0 282 546 sollen Kondensate mit Chlorformyl-Endgruppen mit guter Phosgenausbeute dadurch nach dem Zweiphasengrenzflächen-Verfahren hergestellt werden können, daß man in eine vorgelegte organische Phase gleichzeitig eine stabile Diphenol-Wasser-Natronlauge-Suspension und Phosgen kontinuierlich einmischt und das Reaktionsprodukt anschließend isoliert. Während der Reaktion werden pH-Werte zwischen 2 und 5 eingestellt. Nachteilig sind technische Schwierigkeiten bei der Dosierung der Suspension und der geringe pH-Wert, der die Phosgenierungszeit erheblich erhöht. Maßnahmen für eine Polykondensation werden hier nicht beschrieben.

Aus der EP 0 263 432 ist zu erfahren, daß Kondensate mit Chlorformyl-Endgruppen oder Polycarbonate aus wäßriger Diphenolatlösung und organischer Lösung dadurch hergestellt werden können, daß man bei pH-Werten zwischen 8 und 11, Temperaturen zwischen 15 und 50°C und einem Phosgenüberschuß von mindestens 10 Mol-% Phosgen in eine heterogene Mischung einmischt und die Phosgenierung unter gleichzeitigem Nachdosieren von Alkali- oder Erdalkalilaugen fortführt. Bevorzugte Phasenverhältnisse sind 0,4 bis 1 zu 1 wasser-zu-öl-Verhältnisse, wobei Wasser nachdosiert wird.

Aus der DOS 2 725 967 geht die Lehre hervor, daß es für die Phosgenausbeute eines kontinuierlichen Verfahrens günstig ist, wäßrige und organische Phase, die Phosgen gelöst enthält, zunächst in einem Rohr zusammenzuführen und dann in einem Reaktor vom Tanktyp einzuführen. Die Verweilzeit in diesem Rohr sollte zwischen 0,5 und 15 Sekunden betragen. Der Phosgenüberschuß der Reaktion beträgt mindestens 10 Mol-%. Nachteilig ist der immer noch recht hohe Phosgenüberschuß. Außerdem hat das Verfahren den Nachteil, daß die Phosgenierung bei ungünstigen Phasenverhältnissen (Öl zu Wasser = 0,2 bis 1) stattfindet, damit die Trennung der Phasen nach Abschluß der Reaktion sicher möglich ist.

Nach der EP 0 306 838 A2 wird die Phosgenierung unter Verwendung eines automatischen Chlorid-Detektors in-situ überwascht. Durch diese Prozeßführung werden Schwankungen im Chemismus der Reaktion unterdrückt und die technischen Eigenschaften der Polycarbonate angeblich deutlich verbessert. Der Grundgedanke des Verfahrens besteht darin, nicht abreagiertes Diphenolat in den Prozeß zurückzuführen. Nachteilig sind allerdings die Phosgen-Nebenreaktionen, die sich auch in dieser Rückführungsmaßname äußern.

Nach der EP-0 339 502 A2 wird bekannt, daß die Phosgen-Nebenreaktionen insbesondere dadurch erhöht werden, daß eine hohe Natronlauge-Anfangskonzentration vorliegt. In dieser Patentschrift wird daher die Diphenol-Natronlauge-Wasser-Lösung im Alkali-Hydroxy-Verhältnis von unter 2:1 (Alkalilauge-Unterschuß) mit der organischen Phasen zusammengeführt, wobei sich in dieser ersten Reaktionsstufe Oligomere mit Molekulargewicht zwischen 300 und 3000 g/mol bilden. Die Phasenverhältnisse Wasser zu Öl sind größer als 1. Außerdem sind die Phosgen-Nebenreaktionen immer noch recht ungünstig.

Aus der EP-0 305 691 A2 geht hervor, daß - allerdings bei einem sehr hohen Phosgenüberschuß (20 bis 100 Mol-% Überschuß) - im Zweiphasengrenzflächen-Verfahren eine feine Emulsion - erzielt durch hohe Mischleistung - für den Reaktionsverlauf günstig ist. Der hohe Phosgeneinsatz bewirkt eine gute Phasentrennung trotz intensiver Vermischung der Emulsion zu Beginn der Reaktion. Die Phosgenausbeute ist allerdings recht ungünstig.

In der deutschen Patentanmeldung P 4 118 232.4 (Le A 28 238) wird ein spezielles Verfahren zur Vermeidung von Phosgen-Nebenreaktionen beschrieben, in welchem die Natronlauge in spezieller Form nachdosiert wird.

Zur Verbesserung der Raumzeitausbeute bei vorhandenen Reaktionsapparaten liegt es nahe, die Konzentrationen der Reaktanten zu erhöhen. Ihre Löslichkeit in dem Trägermedium (organisches Lösungsmittel bzw. Wasser) ist aber nur begrenzt, so daß man zu höheren Temperaturen gehen muß. Die dabei entstehenden schnelleren Reaktionen führen auch zu mehr Nebenreaktionen, die u.a. die Phosgenausbeute verschlechtern.

Die der Erfindung zugrunde liegende technische Aufgabe war es, die Phosgenausbeute in einem speziellen Reaktionsapparat, nämlich einem Rohrreaktor mit anschließendem Rührkessel gegebenenfalls mit Umlaufrohr und die Raumzeitausbeute unter besonders günstigem Rohstoffeinsatz bei höheren Temperaturen zu verbessern.

Trotz der Erwartung, daß bei höheren Temperaturen üblicherweise auch die Nebenreaktionen sich ungünstig auswirken (siehe z.B. Konzessionsunterlagen der Firma DOW für die Polycarbonate-Anlage in Stade, Deutschland, die 1989 zur Einsichtnahme öffentlich auslagen), wurde nun erfindungsgemäß gefunden, daß das Reaktionsapparatesystem Reaktionsrohr mit anschließendem Rührkessel, wobei dieser gegebenenfalls einen Umlauf zur Rückvermischung enthält, für das Zweiphasengrenzflächenverfahren zur Herstellung von Polycarbonaten bei guter Raumzeitausbeute die eingesetzten Rohrstoffe, insbesondere Phosgen, dadurch besonders gut nutzt, daß man die folgenden Maßnahmen ergreift:

1. Vorwärmen einer 25 bis 30%igen Natriumbisphenolat-Lösung auf mindestens 45°C, wobei sich Gewichtsprozente auf das Gewicht von NaBPA in wäßriger Lösung beziehen, und die Lösung möglichst wenig freie Natronlauge enthält und einen pH ≤ 11.3 hat,

2. Einmischen von gasförmigem Phosgen in Methylenchlorid oder Chlorbenzol oder ein Gemisch von Methylenchlorid und Chlorbenzol - gegebenenfalls schon unter Druck von 1 bis 10 bar - in Mengen so, daß bezogen auf die Menge an eingesetztem Natriumbisphenolat der Maßnahme 1 - ein molarer Phosgenüberschuß von 5 bis 65 Mol-% vorliegt,

2a. wobei gegebenenfalls das Einmischen zur Vermeidung eines größeren Phosgenpuffers in der Produktionsanlage mit Mischaggregaten hoher Mischleistung gegebenenfalls unter Druck erfolgt,

3. Zusammenbringen der beiden Lösungen in einem Mischer, der die gemischte Emulsion wenigstens zum Teil entgegen der Schwerkraft in ein Rohr führt,

4. in welchem nach einer Verweilzeit von mindestens 10 Sekunden ohne Abführung der Reaktionswärme gegebenenfalls Natriumbisphenolat für den Fall hohen Phosgeneinsatzes in Maßnahme 2 derart nachdosiert wird, daß - bezogen auf die Gesamtmenge an dosiertem Natriumbisphenolat - ein Netto-Phosgenüberschuß von höchstens 10 Mol-% vorliegt,

5. anschließend - gegebenenfalls noch in dem Reaktionsrohr - Kettenabbrecher, bevorzugt Phenol, para-tertiär-Butylphenol oder Isooctylphenol, gelöst in wäßriger Phase oder gelöst in organischer Phase zugegeben wird, wobei kurz vorher, gleichzeitig oder kurz nachher auch Natronlauge zudosiert wird zur Einstellung eines pH-Wertes von 11 bis 14,

6. anschließend die Reaktionswärme in einem Rührkessel abgeführt wird und die Polymerkette unter Zugabe von Natronlauge und Katalysator, bevorzugt Triethylamin oder N-Ethylpiperidin, aufgebaut wird, wobei der Emulsionstyp in dem Reaktionsrohr ein Wasser-in-Öl-Emulsionstyp ist und im Reaktionsrohr auch bleibt und im Rührkessel eine Öl-in-Wasser-Emulsion vorliegt.

Gegenstand der vorliegenden Erfindung ist somit ein Verfahren zur kontinuierlichen Herstellung von thermoplastischen, aromatischen Polycarbonaten in einem Reaktionsapparatesystem enthaltend ein Reaktionsrohr mit anschließendem Rührkessel, wobei dieser gegebenenfalls einen Umlauf zur Rückvermischung des Reaktionsgutes enthält, das dadurch gekennzeichnet ist, daß man

1. eine 25 bis 30 gew.-%ige Di-alkalidiphenolat-Lösung in Wasser, die möglichst wenig freie Alkalilauge enthält und einen pH ≤ 11.3 hat, auf mindestens 45°C, vorzugsweise auf 45°C bis 80°C vorwärmt,

2. gasförmiges Phosgen in $CH_2Cl_2$ und/oder in Chlorbenzol, gegebenenfalls unter Anwendung von 1 bar bis 10 bar Druck in einer Menge einmischt, daß ein molarer Überschuß von 5 Mol-% bis 65 Mol-%, bezogen auf Alkalidiphenolat-Menge von Maßnahme 1, vorliegt, wobei

2a. gegebenenfalls das Einmischen zur Vermeidung eines größeren Phosgenpuffers in der Produktionsanlage mit Mischaggregaten sehr hoher Mischleistung und gegebenenfalls unter Druck von bis zu 10 bar erfolgt,

3. die in 1 und 2 hergestellten Lösungen in einem Mischer zusammenführt, der die gemischte Emulsion wenigstens zum Teil entgegen der Schwerkraft in ein Rohr führt, in welchem

4. nach einer Verweilzeit von mindestens 10 Sekunden, vorzugsweise von 10 Sekunden bis 30 Sekunden ohne Abführung von Reaktionswärme gegebenenfalls 5%ige bis 35%ige Di-alkali-diphenolat-Lösung in Wasser nachdosiert wird, so daß ein Netto-Phosgenüberschuß von höchstens 10 Mol-%, bezogen auf Gesamtmolmenge an eingesetztem Di-alkali-diphenolat, vorliegt,

5. anschließend, gegebenenfalls noch im Reaktionsrohr, Kettenabbrecher gelöst in wäßriger oder organischer Phase zugegeben wird, wobei kurz vorher, gleichzeitig oder kurz nachher durch wäßrige NaOH-Lösung ein pH-Wert zwischen 11 und 14 eingestellt wird, und

6. anschließend, im Rührkessel die Reaktionswärme abgeführt wird und die Polykondensation durch Zugabe von wäßriger Natronlauge und Katalysator zu Ende geführt wird.

Das Verfahren eignet sich zur Herstellung bekannter Polycarbonate bekannter molekularer Architektur auf Basis von Bisphenol-A. Gegebenenfalls kann anstelle von reinem Bisphenol-A auch ein Gemisch aus Bisphenol-A mit anderen bekannten Diphenolen eingesetzt werden. In diesem Fall beziehen sich die nachfolgenden Beschreibungen auf das entsprechende Gemisch.

Als organisches Lösungsmittel kommt Methylenchlorid, Monochlorbenzol oder ein Lösungsmittelgemisch aus beiden in Frage.

In der Maßnahme 1 wird eine 25 bis 30 %ige Natriumbisphenolat-Lösung auf mindestens 45°C vorgewärmt. Bevorzugte Vorwärmtemperaturen sind solche, bei denen sich die vorgegebene Konzentration (z.B. 30 %) an Natriumbisphenolat gerade noch in der wäßrigen Lösung löst. Bevorzugt wird die Lösung so angesetzt, daß möglichst wenig freie Natronlauge (überschüssige Natronlauge) vorliegt. Überschüssige Natronlauge liegt immer dann vor, wenn bei gegebener Temperatur und Konzentration an eingesetztem Bisphenol mehr Natronlauge als für das Lösen des Bisphenols notwendig eingesetzt wird. Allgemein liegen die Vorwärmtemperaturen zwischen 45° und 90°C.

In der Maßnahme 2 wird gasförmiges Phosgen in das Lösungsmittel eingemischt. Gegebenenfalls wird bei einem Vordruck von 1 bis 10 bar das Lösungsmittel schon auf Temperatur zwischen 30°C und 80°C vorgewärmt. Bevorzugte Temperaturen sind die Temperaturen, die auch bei der Maßnahme 1 eingesetzt werden.

Als Mischer für die Maßnahme 2a kommen in Frage: statische Mischer, insbesondere solche des Typs BKM, Zweistoffdüsen mit einer Verweil- und Mischzeit von mindestens 20 Millisekunden wie z.B. Vollkegeldüsen, Hohlkegelexzenterdüsen, Axialhohlkegeldüsen und Pneumatik-Zerstäuberdüsen, Ringlochdüsen und andere.

Es können in der Maßnahme 3 sowohl die gleichen wie auch andere Mischer eingesetzt werden. Gegebenenfalls reichen auch einfache T-Rohrstücke zum Vermischen aus.

Die Nachdosierung von Natriumbisphenolat erfolgt in der Maßnahme 4 gegebenenfalls, wenn in der Maßnahme 2 zunächst ein hoher Phosgenüberschuß gewählt worden ist.

In der Maßnahme 5 kann der Kettenabbrecher entweder als Phenolat, d.h. gelöst in wäßriger NaOH, oder als Phenol, d.h. in organischer Phase gelöst, zugegeben werden.

Die Abführung der Reaktionswärme erfolgt in einem Rührkessel. Es kommen hier praktisch alle Rührer in Frage, die die Emulsion genügend und gezielt durchmischen.

Von besonderem Vorteil kann es sein, im Rührkessel eine Öl-in-Wasser-Emulsion vorliegen zu haben. Dazu kann man das bevorzugt kontinuierliche Verfahren bevorzugt dadurch anfahren, daß man diesem Emulsionstyp oder nur eine wäßrige Phase im Rührkessel vorlegt. Der Rührkessel hat gegebenenfalls einen Umlauf zur Verbesserung der Rückvermischung und zur Optimierung der Verweilzeitverteilung. Gegebenenfalls kann der Rührkessel mit dem Rohrumlauf auch ein Umpumpreaktor mit Wärmetauscher, Pumpe, Entgasungsbehälter und internen weiteren Mischaggregaten, bevorzugt statischen Mischern, sein.

Restgase, insbesondere überschüssiges Chlor oder Kohlenmonoxid, werden über eine Abführung im Rührkessel aus der Reaktion entfernt und entweder zur Phosgenvereinigung zurückgeführt oder einer Phosgenvernichtung zugeführt.

Die Polycarbonate werden nach bekannten Verfahren isoliert. Bevorzugte Verfahren sind Verfahren der Dampfstrippung, Fällung, Eindampfung oder Sprühverdampfung.

Die nach dem erfindungsgemäßen Verfahren erhältlichen Polycarbonate haben Molekulargewichte $\overline{M}w$ (Gewichtsmittel, ermittelt durch Gelpermeationschromatographie, von 15.000 bis 200.000 g/mol, bevorzugt 17.000 bis 100.000 g/mol.

Die Polycarbonate sind in der bekannten Weise zu verschieden Formkörper, beispielsweise zu Folien, durch Extrusion oder Spritzguß verarbeitbar.

Die technische Verwendung der aus der erfindungsgemäß erhältlichen Polycarbonaten Formkörper erfolgt in bekannter weise beispielsweise auf dem Elektrosektor oder im Automobilbereich.

Die als Beispiele aufgeführten Versuche wurden in einem 1-L-Laborreaktor mit Blattrührer der Fa. Büchi durchgeführt. Der Reaktor ist mit einem Kühlmantel versehen, über den bei Bedarf die Reaktionswärme abgeführt werden kann. Angeschlossen an den Reaktor ist ein temperierbares Vorratsgefäß, aus dem wäßrige NaBPA-Lösung schlagartig in den Reaktor dosiert werden kann.

Die Laboranlage wurde so gewählt, daß damit die Reaktionsführung in dem oben beschriebenen Reaktionsapparatesystem mit Rohrreaktor und nachgeschaltetem Rührkessel nachgestellt werden kann.

Beispiel 1

In den Reaktor wurden 200 g Methylenchlorid vorgelegt und 36 g (0,363 mol) Phosgen unter starkem Rühren gelöst (entspricht Maßnahme 2).

Im Vorratsgefäß wurden 240 g Wasser, 76 g Bisphenol-A (BPA) (0,33 mol) und 26,4 g NaOH (0,66 mol) auf ca. 50°C temperiert und intensiv gemischt bis eine homogene Lösung entstand (entspricht Maßnahme 1).

Die wäßrige Natriumbisphenolat-Lösung wurde unter starkem Rühren schlagartig in dem Reaktor dosiert. Die Temperatur der entstehenden Emulsion stieg während der Phosgenierung auf ca. 80°C (entspricht Maßnahme 3). Nach einer Minute wurde 0,56 g Phenol (0,006 mol) in 5,5 g 25 %ige NaOH (0,034 mol) nachdosiert (entspricht Maßnahme 5).

Nach 10 Minuten wurde die Emulsion auf 30°C abgekühlt. Danach wurde 1,5 g 5 %ige N-Ethylpiperidin-Lösung in Methylenchlorid und 17,6 g 25 %ige NaOH (0,11 mol) zugegeben. Die Temperatur wurde bei 30°C gehalten (entspricht Maßnahme 6).

Nach weiteren 10 Minuten wurde die Reaktion abgebrochen, indem der Rührer abgestellt und die Emulsion getrennt wurde.

Analyse: Molekulargewicht des Polycarbonates: 28 000; rel. Viskosität (0,5 %ig in Methylenchlorid). 1,28; BPA-Gehalt der Mutterlauge: 500 ppm; Carbonat-Gehalt der Mutterlauge: 0,6 %.

Diese Reaktionsführung ergab eine hohe Phosgenausbeute und eine gut trennbare Emulsion.

Beispiel 2

In den Reaktor wurden 200 g Methylenchlorid vorgelegt und 36 g (0,363 mol) Phosgen unter starkem Rühren gelöst (entspricht Maßnahme 2).

Im Vorratsgefäß wurden 240 g Wasser, 76 g Bisphenol-A (BPA) (0,33 mol) und 26,4 g NaOH (0,66 mol) auf ca. 50°C temperiert und intensiv gemischt bis eine homogene Lösung entstand (entspricht Maßnahme 1).

220 g der insgesamt 331,3 g der wäßrige Natriumbisphenolat-Lösung wurde unter starkem Rühren schlagartig in dem Reaktor dosiert. Die Temperatur der entstehenden Emulsion stieg während der Phosgenierung auf ca. 80°C (entspricht Maßnahme 3).

Nach 30 Sekunden wurden die restlichen 111,3 g der wäßrigen Natriumbisphenolat-Lösung in dem Reaktor dosiert. Dabei invertierte die vorliegende w/o-Emulsion in eine o/w-Emulsion (entspricht Maßnahme 4).

Nach zwei Minuten wurde 0,56 g Phenol (0,006 mol) in 5,5 g 25 %ige NaOH (0,034 mol) nachdosiert (entspricht Maßnahme 5).

Nach 10 Minuten wurde die Emulsion auf 30°C abgekühlt. Danach wurden 1,5 g 5 %ige N-Ethylpiperidin-Lösung in Methylenchlorid und 17,6 g 25 %ige NaOH (0,11 mol) zugegeben. Die Temperatur wurde bei 30°C gehalten (entspricht Maßnahme 6).

Nach weiteren 10 Minuten wurde die Reaktion abgebrochen, indem der Rührer abgestellt und die Emulsion getrennt wurde.

Analyse: Molekulargewicht des Polycarbonates: 28000; rel. Viskosität (0,5 %ig in Methylenchlorid): 1,28; BPA-Gehalt der Mutterlauge; 500 ppm, Carbonat-Gehalt der Mutterlauge: 0,6 %.

Diese Reaktionsführung ergab eine hohe Phosgenausbeute und eine gute trennbare Emulsion.

Beispiel 3 (Gegenbeispiel):

In den Reaktor wurden 200 g Methylenchlorid vorgelegt und 36 g (0,363 mol) Phosgen unter starkem Rühren gelöst (entspricht Maßnahme 2).

Im Vorratsgefäß wurden 240 g Wasser, 76 g BPA (0,33 mol) 0,56 g Phenol (0,006 mol) und 30 g NaOH (0,75 mol) auf ca. 55 °C temperiert und intensiv gemischt bis eine homogene Lösung entstand (entspricht Maßnahme 1).

Die wäßrige Natriumbisphenolat-Lösung wurde unter starkem Rühren schlagartig in dem Reaktor dosiert. Die Temperatur der entstehenden Emulsion stieg während der Phosgenierung auf ca. 85°C (entspricht Maßnahme 3). Nach 10 Minuten wurde die Emulsion auf 30°C abgekühlt. Danach wurden 1,5 g 5 %ige N-Ethylpiperidin-Lösung in Methylenchlorid und 8,6 g 25 %ige NaOH (0,054 mol) zugegeben. Die Temperatur wurde bei 30°C gehalten (entspricht Maßnahme 6). Nach weiteren 10 Minuten wurde die Reaktion abgebrochen, indem der Rührer abgestellt und die Emulsion getrennt wurde.

Analyse: Molekulargewicht des Polycarbonates: 3000; rel. Viskosität (0,5 %ig in Methylenchlorid): 1,05; BPA-Gehalt der Mutterlauge: 3500 ppm; Carbonat-Gehalt der Mutterlauge: 1,1 %.

Diese Reaktionsführung ergab eine zu schlechte Phosgenausbeute, um ein Polycarbonat mit hohem Molekulargewicht herzustellen.

Beispiel 4 (Gegenbeispiel):

In den Reaktor wurden 200 g Methylenchlorid vorgelegt und 45,7 g (0,462 mol) Phosgen unter starkem Rühren gelöst (entspricht Maßnahme 2).

Im Vorratsgefäß wurden 240 g Wasser, 76 g BPA (0,33 mol), 0,56 g Phenol (0,006 mol) und 30 g NaOH (0,75 mol) auf ca. 55°C temperiert und intensiv gemischt bis eine homogene Lösung entstand (entspricht Maßnahme 2).

Die wäßrige Natriumbisphenolat-Lösung wurde unter starkem Rühren schlagartig in dem Reaktor dosiert. Die Temperatur der entstehenden Emulsion stieg während der Phosgenierung auf ca. 90°C (entspricht Maßnahme 3). Nach 10 Minuten wurde die Emulsion auf 30°C abgekühlt. Danach wurden 1,5 g 5 %ige N-Ethylpiperidin-Lösung in Methylenchlorid und 76,8 g 25 %ige NaOH (0,48 mol) zugegeben. Die Temperatur wurde bei 30°C gehalten. Nach weiteren 10 Minuten wurde die Reaktion abgebrochen, indem der Rührer abgestellt und die Emulsion getrennt wurde.

Analyse: Molekulargewicht des Polycarbonates: 28 000; rel. Viskosität (0,5 %ig in Methylenchlorid): 1,28; BPA-Gehalt der Mutterlauge: 1 500 ppm; Carbonat-Gehalt der Mutterlauge: 2,1 %.

Diese Reaktionsführung ergab das gewünschte Produkt. Die Phosgenausbeute war niedrig. Die Carbonat- und Kochsalz-Konzentration in der Mutterlauge waren im Vergleich zu den anderen Reaktionsführungen hoch.

**Patentansprüche**

1. Verfahren zur kontinuierlichen Herstellung von thermoplastischen, aromatischen Polycarbonaten in einem Reaktionsapparatesystem enthaltend ein Reaktionsrohr mit anschließendem Rührkessel, wobei dieser gegebenenfalls einen Umlauf zur Rückverminderung des Reaktionsgutes enthält, dadurch gekennzeichnet, daß man

   1. eine 25 bis 30 gew.-%ige Dialkalidiphenolat-Lösung in Wasser, die möglichst wenig freie Alkalilauge enthält und einen pH ≤ 11.3 hat, auf mindestens 45°C vorwärmt,

   2. gasförmiges Phosgen in $CH_2Cl_2$ und/oder Chlorbenzol in einer Menge einmischt, daß ein molarer Überschuß von 5 Mol-% bis 65 Mol-%, bezogen auf Alkalidiphenolat-Menge von Maßnahme 1, vorliegt,

   3. die in 1 und 2 hergestellten Lösungen in einem Mischer zusammenführt, der die gemischte Emulsion wenigstens zum Teil entgegen der Schwerkraft in ein Rohr führt, in welchem

   4. nach einer Verweilzeit von mindestens 10 Sekunden ohne Abführung von Reaktionswärme gegebenenfalls 5%ige bis 35%ige Di- alkali-diphenolat-Lösung in Wasser nachdosiert wird, so daß ein Netto-Phosgenüberschuß von höchstens 10 Mol-%, bezogen auf Gesamtmolmenge an eingesetztem Di-alkali-diphenolat, vorliegt,

   5. anschließend Kettenabbrecher gelöst in wäßriger oder organischer Phase zugegeben wird, wobei kurz vorher, gleichzeitig oder kurz nachher durch wäßrige NaOH-Lösung ein pH-Wert zwischen 11 und 14 eingestellt wird, und

   6. anschließend im Rührkessel die Reaktionswärme abgeführt wird, die Polykondensation durch Zugabe von wäßriger Natronlauge und Katalysator zu Ende geführt wird.

2. Verfahren gemäß Anspruch 1, dadurch gekennzeichnet, daß gemäß Maßnahme 1 die Lösung auf 45°C bis 80°C vorgewärmt wird.

3. Verfahren gemäß Anspruch 1, dadurch gekennzeichnet, daß die Maßnahme 2 unter einem Druck von 1 bar bis 10 bar durchgeführt wird.

4. Verfahren gemäß Anspruch 1, dadurch gekennzeichnet, daß das Einmischen von Phosgen gemäß Maßnahme 2a mit Mischaggregaten sehr hoher Mischleistung und gegebenenfalls unter Druck von bis zu 10 bar erfolgt.